# EUROPEAN PATENT APPLICATION

(11) **EP 4 484 728 A1**
(43) Date of publication of application: **01.01.2025**
(21) Application number: 24184777.1
(22) Date of filing: 26.06.2024
(51) Int. Cl.: F02C 6/14, B64D 27/33, B64D 35/08, B64F 5/60, F02C 6/20, F02C 7/36, F02K 5/00, F02C 6/00, F01D 21/00, F02C 7/228, F02C 9/34, F02C 9/40, F02K 3/08, F02C 9/46

(54) **AIRCRAFT POWERPLANT WITH MULTIPLE INDEPENDENT FUEL SYSTEMS**

(30) Priority: 26.06.2023 US 202318214248
(71) Applicant: PRATT & WHITNEY CANADA CORP., Longueuil, Québec J4G 1A1 (CA)
(72) Inventor: MARK, Michael, (01BE5) Longueuil, J4G 1A1 (CA); HANNA, Michael, (01BE5) Longueuil, J4G 1A1 (CA)
(74) Representative: Dehns

(57) **Abstract**

An aircraft system (20) includes a propulsor rotor (22) and a powerplant (24) configured to drive rotation of the propulsor rotor (22). The powerplant (24) includes a turbine section (36), a flowpath (40), a first fuel system (44) and a second fuel system (46) fluidly independent of the first fuel system (44). The turbine section (36) includes a turbine rotor (54). The flowpath (40) extends through the turbine section (36) from an inlet (66) into the flowpath (40) to an exhaust (68) from the flowpath (40). The first fuel system (44) is configured to direct first fuel into the flowpath (40) between the inlet (66) and the turbine rotor (54). The second fuel system (46) is configured to direct second fuel into the flowpath (40) between the inlet (66) and the turbine rotor (54).

## Description

### TECHNICAL FIELD

This disclosure relates generally to an aircraft powerplant and, more particularly, to fuel delivery to the aircraft powerplant.

### BACKGROUND INFORMATION

Various types and configurations of fuel systems are known in the art for an aircraft powerplant such as a gas turbine engine. While these known fuel systems have various benefits, there is still room in the art for improvement.

### SUMMARY

According to an aspect of the present disclosure, a system is provided for an aircraft. This aircraft system includes a propulsor rotor and a powerplant configured to drive rotation of the propulsor rotor. The powerplant includes a turbine section, a flowpath, a first fuel system and a second fuel system fluidly independent of the first fuel system. The turbine section includes a turbine rotor. The flowpath extends through the turbine section from an inlet into the flowpath to an exhaust from the flowpath. The first fuel system is configured to direct first fuel into the flowpath between the inlet and the turbine rotor. The second fuel system is configured to direct second fuel into the flowpath between the inlet and the turbine rotor.

According to another aspect of the present disclosure, another system is provided for an aircraft. This aircraft system includes a propulsor rotor, a powerplant, a first controller and a second controller. The powerplant is configured to drive rotation of the propulsor rotor. The powerplant includes a turbine section, a flowpath, a first fuel system and a second fuel system. The turbine section includes a turbine rotor. The flowpath extends through the turbine section. The flowpath includes a first combustion zone and a second combustion zone between the first combustion zone and the turbine rotor. The first fuel system is configured to deliver first fuel to the first combustion zone. The second fuel system is configured to deliver second fuel to the second combustion zone. The first controller is configured to control operation of the first fuel system. The second controller is configured to control operation of the second fuel system independent of the first controller.

According to still another aspect of the present disclosure, another system is provided for an aircraft. This aircraft system includes a propulsor rotor, a powerplant, a first controller and a user interface. The powerplant is configured to drive rotation of the propulsor rotor. The powerplant includes a turbine section, a flowpath, a first fuel system and a second fuel system. The turbine section includes a turbine rotor. The flowpath extends through the turbine section. The flowpath includes a first combustion zone and a second combustion zone between the first combustion zone and the turbine rotor. The first fuel system is configured to deliver first fuel to the first combustion zone. The second fuel system configured to deliver second fuel to the second combustion zone. The first controller is configured to control operation of the first fuel system. The user interface is configured to control operation of the second fuel system independent of the first controller.

The first controller may be configured to control operation of the first fuel system independent of the second controller.

The aircraft system may also include a user interface configured to control operation of the second fuel system independent of the second controller.

The aircraft system may also include a first controller and a second controller. The first controller may be configured to control operation of the first fuel system. The second controller may be configured to control operation of the second fuel system. The second controller may be discrete from the first controller.

The first controller may also be configured to control operation of the second fuel system.

The aircraft system may also include a user interface configured to control operation of the second fuel system independent of at least one of the first controller or the second controller.

The aircraft system may also include a controller and a user interface. The controller may be configured to control operation of the first fuel system. The user interface may be configured to control operation of the second fuel system independent of the first controller.

The first controller may also be configured to control operation of the second fuel system.

The aircraft system may also include a first controller and a second controller. The first controller may be configured to control operation of the first fuel system during a first mode of operation. The first controller may be configured to control operation of the first fuel system and the second fuel system during a second mode of operation. The second controller may be configured, as a backup to the first controller, to control operation of the second fuel system during the second mode of operation.

The second fuel system may be non-operational during the first mode of operation.

The aircraft system may also include a fuel reservoir. The first fuel system and the second fuel system may be fluidly coupled to the fuel reservoir in parallel.

The first fuel system may include a first fuel reservoir. The second fuel system may include a second fuel reservoir discrete from the first fuel reservoir.

The first fuel system may be configured to direct the first fuel into a first combustion zone along the flowpath between the inlet and the turbine rotor. The second fuel system may be configured to direct the second fuel into a second combustion zone along the flowpath between the first combustion zone and the turbine rotor.

The powerplant may include a heat engine and an inter-burner outside of the heat engine. The first combustion zone may be located within the heat engine. The second combustion zone may be located within the inter-burner.

The first fuel system may be configured to direct the first fuel into a first combustion zone along the flowpath between the inlet and the turbine rotor. The second fuel system may be configured to direct the second fuel into the first combustion zone along the flowpath between the first combustion zone and the turbine rotor.

The powerplant may include a heat engine with a combustor. The first combustion zone may be located within the combustor.

The powerplant may be configured as or otherwise include a turbo-compounded intermittent internal combustion engine.

The powerplant may be configured as or otherwise include a gas turbine engine.

The propulsor rotor may be configured as or otherwise include an un-ducted propulsor rotor.

The propulsor rotor may be configured as or otherwise include a ducted propulsor rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant with an intermittent internal combustion engine.
FIG. 2 is a schematic illustration of multiple independent fuel systems each with its own dedicated fuel reservoir.
FIG. 3 is a schematic illustration of a controller.
FIG. 4 is a partial schematic illustration of the aircraft powerplant with a continuous internal combustion engine.

### DETAILED DESCRIPTION

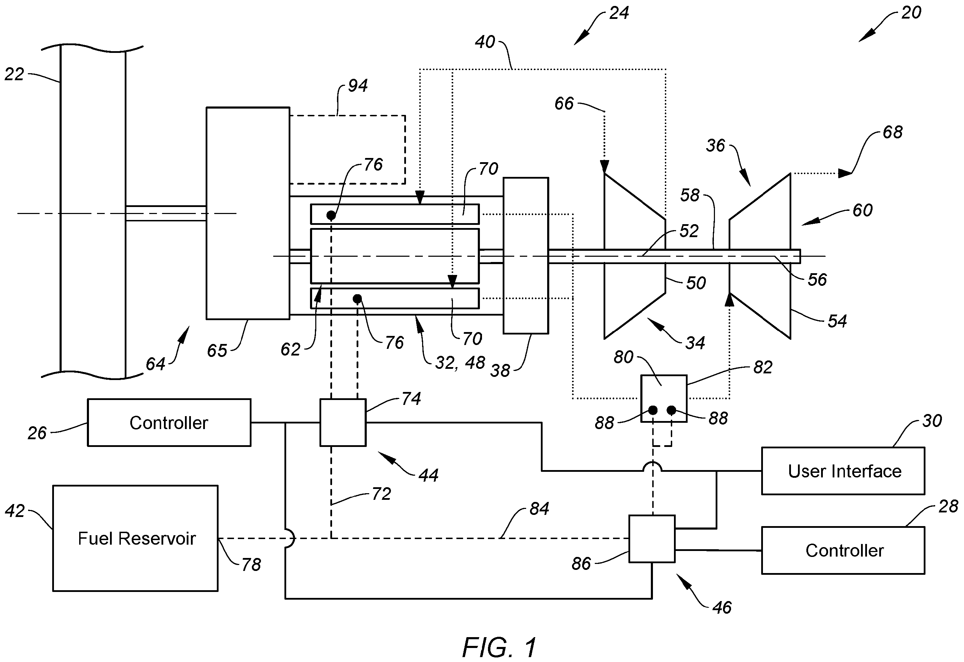

FIG. 1 illustrates a propulsion system 20 for an aircraft. The aircraft may be a fixed wing aircraft (e.g., an airplane), a rotorcraft (e.g., a helicopter), a drone (e.g., an unmanned aerial vehicle (UAV)) or any other manned or unmanned aerial vehicle or system. The aircraft propulsion system 20 of FIG. 1 includes a propulsor rotor 22 and an aircraft powerplant 24 configured to drive rotation of the propulsor rotor 22. The aircraft propulsion system 20 also includes a control system for controlling operation of the aircraft propulsion system 20 and its aircraft powerplant 24. This control system of FIG. 1 includes a primary (e.g., main) controller 26, a secondary (e.g., backup, supplemental, emergency, etc.) controller 28 and a user interface 30.

The propulsor rotor 22 is an air mover operable to generate thrust and/or lift for the aircraft. This propulsor rotor 22 may be configured as an open, un-ducted propulsor rotor or a ducted propulsor rotor. Examples of the un-ducted propulsor rotor include a propeller rotor for a propeller (e.g., turboprop) propulsion system, a rotorcraft rotor (e.g., a main helicopter rotor) for a rotorcraft (e.g., turboshaft) propulsion system, a propfan rotor for a propfan propulsion system and a pusher fan rotor for a pusher fan propulsion system. Examples of the ducted propulsor rotor include a fan rotor for a turbofan propulsion system and a (e.g., first stage) compressor rotor for a turbojet propulsion system. The present disclosure, however, is not limited to the foregoing exemplary un-ducted and ducted propulsor rotors. The propulsor rotor 22 of FIG. 1 includes a propulsor rotor base (e.g., a disk or a hub) and a plurality of propulsor rotor blades (e.g., airfoils). The propulsor rotor blades are arranged circumferentially around the propulsor rotor base in an array. Each of the propulsor rotor blades is connected to (e.g., formed integral with or mechanically fastened, welded, brazed and/or otherwise attached to) and projects radially out from the propulsor rotor base.

The aircraft powerplant 24 may be configured as a turbo-compounded heat engine. The aircraft powerplant 24 of FIG. 1, for example, includes a heat engine 32, a powerplant compressor section 34, a powerplant turbine section 36 and a powerplant geartrain 38; e.g., a turbine gearbox. The aircraft powerplant 24 also includes a powerplant flowpath 40, a fuel reservoir 42, a primary (e.g., main) fuel system 44 and a secondary (e.g., backup, supplemental, auxiliary, emergency, etc.) fuel system 46.

The heat engine 32 may be configured as or otherwise include an intermittent internal combustion (IC) engine 48 ("intermittent combustion engine"). The intermittent combustion engine 48 is an internal combustion (IC) engine in which a mixture of fuel and air is intermittently (e.g., periodically) detonated within the engine. Examples of the intermittent combustion engine 48 include, but are not limited to, a reciprocating piston engine (e.g., an inline (I) engine, a V-engine, a W-engine, etc.), a rotary engine (e.g., a Wankel engine), a rotating detonation engine and a pulse detonation engine. The present disclosure, however, is not limited to intermittent combustion engine applications.

The compressor section 34 includes a bladed compressor rotor 50. This compressor rotor 50 may be configured as a radial flow compressor rotor; e.g., an axial inflow-radial outflow compressor rotor, a centrifugal compressor rotor, a compressor impeller, etc. Alternatively, the compressor rotor 50 may be configured as an axial flow compressor rotor; e.g., an axial inflow-axial outflow compressor rotor. Still alternatively, the compressor rotor 50 may include a combination of radial flow and axial flow stages. The compressor rotor 50 of FIG. 1 includes a compressor rotor base (e.g., a disk or a hub) and a plurality of compressor rotor blades (e.g., airfoils, vanes, etc.). The compressor rotor blades are arranged circumferentially around the compressor rotor base in an array. Each of the compressor rotor blades is connected to (e.g., formed integral with or mechanically fastened, welded, brazed and/or otherwise attached to) and projects radially out from the compressor rotor base. The compressor rotor 50 is rotatable about a compressor axis 52.

The turbine section 36 includes a bladed turbine rotor 54. This turbine rotor 54 may be configured as a radial flow turbine rotor; e.g., a radial inflow-axial outflow turbine rotor, a centrifugal turbine rotor, a turbine wheel, etc. Alternatively, the turbine rotor 54 may be configured as an axial flow turbine rotor; e.g., an axial inflow-axial outflow turbine rotor. Still alternatively, the turbine rotor 54 may include a combination of radial flow and axial flow stages. The turbine rotor 54 of FIG. 1 includes a turbine rotor base (e.g., a disk or a hub) and a plurality of turbine rotor blades (e.g., airfoils, vanes, etc.). The turbine rotor blades are arranged circumferentially around the turbine rotor base in an array. Each of the turbine rotor blades is connected to (e.g., formed integral with or mechanically fastened, welded, brazed and/or otherwise attached to) and projects radially out from the turbine rotor base. The turbine rotor 54 is rotatable about a turbine axis 56, which turbine axis 56 may be parallel (e.g., coaxial) with the compressor axis 52.

The turbine rotor 54 may be coupled to the compressor rotor 50 through an intermediate shaft 58. Here, at least (or only) the compressor rotor 50, the turbine rotor 54 and the intermediate shaft 58 may collectively form a rotating assembly 60; e.g., a spool. The rotating assembly 60 and its turbine rotor 54 may also be coupled to an internal rotating assembly 62 of the heat engine 32 (e.g., the intermittent combustion engine 48) through the powerplant geartrain 38 (or otherwise).

The aircraft powerplant 24 and its heat engine 32 are operatively coupled to the propulsor rotor 22. The rotating assembly 62 of FIG. 1, for example, is coupled to and rotatable with the propulsor rotor 22 through a propulsor drivetrain 64. This propulsor drivetrain 64 may be configured as a geared drivetrain, where a propulsor geartrain 65 (e.g., a transmission, a speed change device, an epicyclic geartrain, etc.) is disposed between and operatively couples the propulsor rotor 22 to the rotating assembly 62. With this arrangement, the propulsor rotor 22 may rotate at a different (e.g., slower) rotational velocity than the rotating assembly 62. However, the propulsor drivetrain 64 may alternatively be configured as a direct drive drivetrain, where the propulsor geartrain 65 is omitted. With this arrangement, the propulsor rotor 22 rotates at a common (the same) rotational velocity as the rotating assembly 62.

The powerplant flowpath 40 of FIG. 1 extends longitudinally from an airflow inlet 66 into the powerplant flowpath 40, sequentially through the compressor section 34, the heat engine 32 and the turbine section 36, to a combustion products exhaust 68 from the powerplant flowpath 40. The flowpath inlet 66 may also be an airflow inlet into the aircraft powerplant 24. The flowpath exhaust 68 may also be a combustion products exhaust from the aircraft powerplant 24.

The fuel reservoir 42 is configured to store fuel before, during and/or after aircraft powerplant operation. The fuel reservoir 42, for example, may be configured as or otherwise include a tank, a cylinder, a pressure vessel, a bladder or any other type of fuel storage container.

The primary fuel system 44 is configured to deliver primary fuel (e.g., a quantity of the fuel from the fuel reservoir 42) to one or more primary combustion zones 70 within the aircraft powerplant 24. Each primary combustion zone 70 of FIG. 1 is located within the heat engine 32, and may be formed by a respective portion of the powerplant flowpath 40. Each primary combustion zone 70, for example, may be configured as or otherwise include a (e.g., axial flow, a reverse flow, etc.) combustion chamber, a piston bore and/or the like within the heat engine 32.

The primary fuel system 44 of FIG. 1 includes a primary fuel circuit 72, a primary fuel flow regulator 74 and one or more primary fuel injectors 76. The primary fuel circuit 72 of FIG. 1 is fluidly coupled with an outlet 78 of the fuel reservoir 42. This primary fuel circuit 72 extends longitudinally through the primary fuel flow regulator 74 to the primary fuel injectors 76. The primary fuel circuit 72 thereby fluidly couples the fuel reservoir 42 and its reservoir outlet 78 to the primary fuel injectors 76, through the primary fuel flow regulator 74. The primary fuel flow regulator 74 is configured to selectively direct and/or meter a flow of the fuel - the primary fuel - from the fuel reservoir 42 to one or more of the primary fuel injectors 76. The primary fuel flow regulator 74, for example, may be configured as or otherwise include a fuel pump and/or a valve (or valve system). The primary fuel injectors 76 are arranged with (e.g., on, along, in, etc.) the primary combustion zones 70. These primary fuel injectors 76 are configured to direct (e.g., inject) the primary fuel into the primary combustion zones 70 to mix with compressed air for subsequent combustion. With this arrangement, the primary fuel system 44 may be configured as or otherwise included as part of a primary (e.g., main) power system for the aircraft powerplant 24.

The secondary fuel system 46 is configured to deliver secondary fuel (e.g., another quantity of the fuel from the fuel reservoir 42) to at least (or only) one secondary combustion zone 80 within the aircraft powerplant 24. The secondary combustion zone 80 of FIG. 1 is located outside of the heat engine 32, and may be formed by a respective portion of the powerplant flowpath 40. The secondary combustion zone 80, for example, may be configured as or otherwise include a combustion volume and/or the like within an inter-burner 82 of the aircraft powerplant 24. This inter-burner 82 and its secondary combustion zone 80 are arranged fluidly along the powerplant flowpath 40 between the primary combustion zones 70 and the turbine rotor 54. The inter-burner 82 of FIG. 1 and its secondary combustion zone 80, for example, are arranged fluidly along the powerplant flowpath 40 between the heat engine 32 and the turbine section 36. The present disclosure, however, is not limited to such an exemplary arrangement. The inter-burner 82 and its secondary combustion zone 80, for example, may alternatively be integrated into the heat engine 32, for example downstream of the primary combustion zones 70. In another example, the secondary fuel system 46 and the primary fuel system 44 may alternatively independently direct the secondary fuel and the primary fuel into a common (the same) combustion zone; e.g., a combustion chamber.

The secondary fuel system 46 of FIG. 1 includes a secondary fuel circuit 84, a secondary fuel flow regulator 86 and one or more secondary fuel injectors 88. The secondary fuel circuit 84 of FIG. 1 is fluidly coupled with the reservoir outlet 78. This secondary fuel circuit 84 extends longitudinally through the secondary fuel flow regulator 86 to the secondary fuel injectors 88. The secondary fuel circuit 84 thereby fluidly couples the fuel reservoir 42 and its reservoir outlet 78 to the secondary fuel injectors 88, through the secondary fuel flow regulator 86. The secondary fuel flow regulator 86 is configured to selectively direct and/or meter a flow of the fuel - the secondary fuel - from the fuel reservoir 42 to one or more of the secondary fuel injectors 88. The secondary fuel flow regulator 86, for example, may be configured as or otherwise include a fuel pump and/or a valve (or valve system). The secondary fuel injectors 88 are arranged with (e.g., on, along, in, etc.) the secondary combustion zone 80. These secondary fuel injectors 88 are configured to direct (e.g., inject) the secondary fuel into the secondary combustion zone 80 to mix with compressed air for subsequent combustion. With this arrangement, the secondary fuel system 46 may be configured as or otherwise included as part of a secondary (e.g., supplemental, auxiliary, backup, etc.) power system for the aircraft powerplant 24.

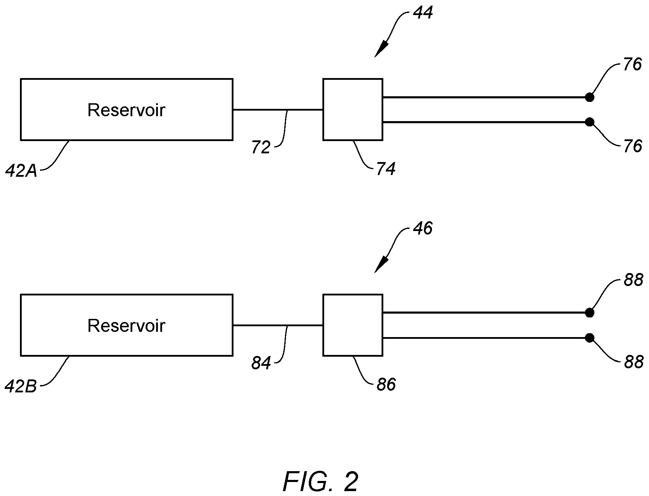

While the primary fuel system 44 and the secondary fuel system 46 of FIG. 1 are both fluidly coupled to the same fuel reservoir 42 (e.g., in parallel), these powerplant fuel systems 44 and 46 may be fluidly and/or operably independent. The primary fuel system 44 of FIG. 1, for example, is fluidly coupled to the fuel reservoir 42 and its reservoir outlet 78 independent of (e.g., not through) the secondary fuel system 46. Similarly, the secondary fuel system 46 of FIG. 1 is fluidly coupled to the fuel reservoir 42 and its reservoir outlet 78 independent of the primary fuel system 44. Moreover, each primary fuel system member 72, 74, 76 of FIG. 1 is discrete and operably independent of each secondary fuel system member 84, 86, 88. Similarly, each secondary fuel system member 84, 86, 88 of FIG. 1 is discrete and operably independent of each primary fuel system member 72, 74, 76. With such an arrangement, the primary fuel system 44 is operable to direct the primary fuel from the fuel reservoir 42 to its primary fuel injectors 76 even where the secondary fuel system 46 is non-operation and/or inoperable; e.g., damaged, plugged, etc. Similarly, the secondary fuel system 46 is operable to direct the secondary fuel from the fuel reservoir 42 to its secondary fuel injectors 88 even where the primary fuel system 44 is non-operation and/or inoperable; e.g., damaged, plugged, etc. Of course, referring to FIG. 2, it is further contemplated each powerplant fuel system 44, 46 may alternatively be configured with its own dedicated fuel reservoir 42A, 42B. Here, the fuels stored within the fuel reservoirs 42A and 42B may be the same type of fuel, or different types of fuel.

The primary controller 26 of FIG. 1 is configured to control operation of the primary fuel system 44. This primary controller 26 may also (or may not) be configured to control operation of the secondary fuel system 46. The primary controller 26 of FIG. 1, for example, is in signal communication with (e.g., hardwired and/or wirelessly coupled to) the primary fuel system 44 and its primary fuel flow regulator 74 and the secondary fuel system 46 and its secondary fuel flow regulator 86. Here, the primary controller 26 may be configured as a main onboard powerplant controller; e.g., an electronic engine controller (EEC), an electronic control unit (ECU), a full-authority digital engine controller (FADEC), etc.

The secondary controller 28 of FIG. 1 is configured to control operation of the secondary fuel system 46. The secondary controller 28 of FIG. 1, for example, is in signal communication with the secondary fuel system 46 and its secondary fuel flow regulator 86. Here, the secondary controller 28 may be configured as a backup, supplemental, auxiliary and/or emergency onboard powerplant controller.

While the primary controller 26 and the secondary controller 28 of FIG. 1 are both in signal communication with and configured to control operation of the secondary fuel system 46, these powerplant controllers 26 and 28 may be independent from one another. The primary controller 26 and the secondary controller 28, for example, may be configured as different electronic devices and may even be located remote from one another within the aircraft powerplant 24. Moreover, the primary controller 26 and the secondary controller 28 may be independently electrically coupled to / in signal communication with the secondary fuel system 46. With such an arrangement, the primary controller 26 is operable to control the primary fuel system 44 and/or the secondary fuel system 46 even where the secondary controller 28 is non-operation and/or inoperable. Similarly, the secondary controller 28 is operable to control the secondary fuel system 46 even where the primary controller 26 is non-operational and/or inoperable.

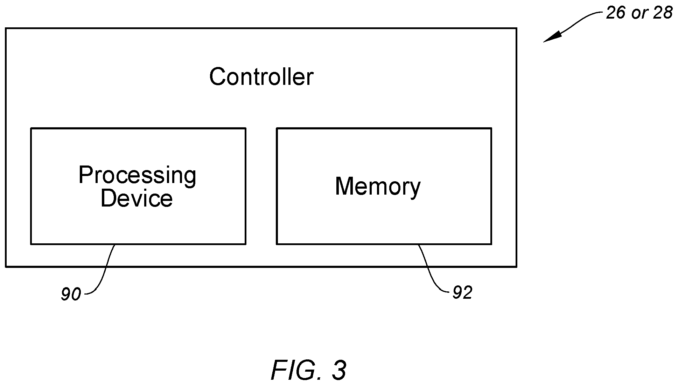

Referring to FIG. 3, each powerplant controller 26, 28 may be implemented with a combination of hardware and software. The hardware may include at least one processing device 90 and memory 92. The processing device 90 may include one or more single-core and/or multicore processors. The hardware may also or alternatively include analog and/or digital circuitry other than that described above. The memory 92 is configured to store software (e.g., program instructions) for execution by the processing device 90, which software execution may control and/or facilitate performance of one or more operations such as those described below. The memory 92 may be a non-transitory computer readable medium. For example, the memory 92 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The user interface 30 may be in signal communication with the primary controller 26, for example independent of the secondary controller 28. The user interface 30 may be in signal communication with the secondary controller 28, for example independent of the primary controller 26. The user interface 30 may also or alternatively be in signal communication with the secondary fuel system 46, for example independent of the primary controller 26 and/or the secondary controller 28. With such an arrangement, the user interface 30 may provide personnel operating the aircraft powerplant 24 / the aircraft (e.g., a pilot) manual control over use of the primary fuel system 44 and/or the secondary fuel system 46 under certain conditions. The user interface 30 may include one or more user interface devices such as, but not limited to, a switch panel, a throttle, a control knob, and the like.

The aircraft powerplant 24 of FIG. 1 is configured to operate in various modes of operation. During a first mode, the aircraft powerplant 24 may operate using (e.g., only) the primary fuel system 44. Here, the secondary fuel system 46 may be non-operation; e.g., turned off. This first mode may be selected during normal aircraft flight; e.g., regular power operation, cruise, etc. During a second mode, the aircraft powerplant 24 may operate using the primary fuel system 44 and the secondary fuel system 46. This second mode may be selected during an emergency and/or when there is higher than normal power demand on the aircraft powerplant 24. While (e.g., ideally) both the primary fuel system 44 and the secondary fuel system 46 operate during the second mode, it is also contemplated the primary fuel system 44 may be non-operable and/or inoperable during the second mode where, for example, the primary fuel system 44 and/or the primary controller 26 is inoperable.

During the first mode, the primary controller 26 signals the primary fuel system 44 to deliver the primary fuel to the primary combustion zones 70. The primary fuel is mixed with compressed air within the primary combustion zones 70. This fuel-air mixture is ignited, and combustion products generated therefrom drive rotation of the rotating assembly 62 of the heat engine 32. The rotation of the rotating assembly 62 drives rotation of the propulsor rotor 22 through the propulsor drivetrain 64, and the rotating propulsor rotor 22 generates aircraft thrust and/or lift. The combustion products further flow out of the heat engine 32 into the turbine section 36 and drive rotation of the turbine rotor 54. The rotation of the turbine rotor 54 drives rotation of the compressor rotor 50, and the rotating compressor rotor 50 compresses air entering the aircraft powerplant 24 and its powerplant flowpath 40 through the flowpath inlet 66 to provide the compressed air to the heat engine 32. During this first mode of operation, the primary fuel system 44 (e.g., alone) may provide all fuel needed for aircraft powerplant operation.

During the second mode, the aircraft powerplant 24 may be operated substantially as described above during the first mode. However, during this second mode, the secondary controller 28 (or the primary controller 26, or the user interface 30) signals the secondary fuel system 46 to deliver the secondary fuel to the secondary combustion zone 80. The secondary fuel is mixed with leftover (e.g., un-reacted) air, as well as combustion products, entering the secondary combustion zone 80 from the heat engine 32. This fuel-air mixture is ignited, and combustion products generated therefrom along with the combustion products generated within the primary combustion zones 70 flow into the turbine section 36 and boost power for driving rotation of the turbine rotor 54. This may further boost power for driving the propulsor rotor 22 where, for example, the rotating assembly 60 is coupled to the propulsor rotor 22 through the powerplant geartrain 38, the rotating assembly 62 and the propulsor geartrain 65 as described above. During this second mode of operation, the primary fuel system 44 and the secondary fuel system 46 individually and independently provide all the fuel needed for aircraft powerplant operation. However, it is contemplated the secondary fuel system 46 (e.g., alone) may be capable of providing enough fuel for combustion within the aircraft powerplant 24 to facilitate (e.g., derated, or full) aircraft powerplant operation. The secondary fuel system 46, for example, may be configured to provide enough fuel to facilitate at least fifty percent (50%), sixty percent (60%), seventy percent (70%) or more (e.g., one hundred percent (100%)) aircraft powerplant operation; e.g., where the primary fuel system 44 is non-operational or inoperable. The secondary fuel system 46 may thereby function as a backup to the primary fuel system 44. By contrast, a typical pilot fuel system for a gas turbine engine is designed to provide about ten or twenty percent (10-20%) of fuel required for normal gas turbine engine operation.

In some embodiments, the aircraft powerplant 24 may be configured as an electric hybrid powerplant. The aircraft powerplant 24 of FIG. 1, for example, includes an electric motor 94 configured to further (e.g., selectively) drive rotation of the propulsor rotor 22. The propulsor drivetrain 64 of FIG. 1, for example, couples both the heat engine 32 and the electric motor 94 to the propulsor rotor 22.

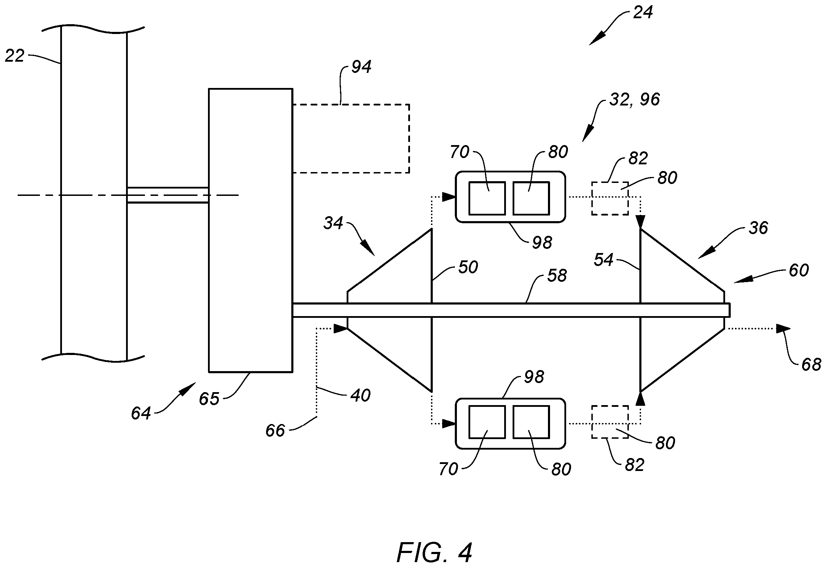

While the heat engine 32 may be configured as an intermittent combustion engine (e.g., 48) as described above, the present disclosure is not limited to such applications. For example, referring to FIG. 4, the heat engine 32 and, more generally, the aircraft powerplant 24 may alternatively be configured as a continuous internal combustion engine such as, but not limited to, a gas turbine engine 96. With such an arrangement, both the primary combustion zone 70 and the secondary combustion zone 80 may be arranged at a common location - here, within a combustor 98 (e.g., an annular combustor) within the gas turbine engine 96. Of course, it is also contemplated the secondary combustion zone 80 may alternatively be disposed downstream of the primary combustion zone 70 / the combustor 98; e.g., the secondary combustion zone 80 may be within the separate inter-burner 82. While the gas turbine engine 96 of FIG. 4 is shown as a single rotating assembly (e.g., spool) engine for ease of illustration, it is contemplated the gas turbine engine 96 may alternatively include two or more rotating assemblies; e.g., spools.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (20) for an aircraft, comprising:
a propulsor rotor (22); and
a powerplant (24) configured to drive rotation of the propulsor rotor (22), the powerplant (24) including a turbine section (36), a flowpath (40), a first fuel system (44) and a second fuel system (46) fluidly independent of the first fuel system (44), the turbine section (36) comprising a turbine rotor (54), the flowpath (40) extending through the turbine section (36) from an inlet (66) into the flowpath (40) to an exhaust (68) from the flowpath (40), the first fuel system (44) configured to direct first fuel into the flowpath (40) between the inlet (66) and the turbine rotor (54), and the second fuel system (46) configured to direct second fuel into the flowpath (40) between the inlet (66) and the turbine rotor (54).

2. The system of claim 1, further comprising:
a first controller (26) configured to control operation of the first fuel system (44); and
a second controller (28) configured to control operation of the second fuel system (46), the second controller (28) discrete from the first controller (26).

3. The system of claim 2, wherein the first controller (26) is further configured to control operation of the second fuel system (46).

4. The system of claim 2 or 3, further comprising a user interface (30) configured to control operation of the second fuel system (46) independent of at least one of the first controller (26) and the second controller (26).

5. The system of claim 1, further comprising:
a first controller (26) configured to control operation of the first fuel system (44) during a first mode of operation, the first controller (26) configured to control operation of the first fuel system (44) and the second fuel system (46) during a second mode of operation; and
a second controller (28) configured, as a backup to the first controller (26), to control operation of the second fuel system (46) during the second mode of operation,
optionally wherein the second fuel system (46) is non-operational during the first mode of operation.

6. The system of any of claims 2 to 5, wherein the second controller (28) is configured to control operation of the second fuel system (46) independent of the first controller (26), and/or the first controller (26) is configured to control operation of the first fuel system (44) independent of the second controller (28).

7. The system of claim 1, further comprising:
a controller (26) configured to control operation of the first fuel system (44); and
a user interface (30) configured to control operation of the second fuel system (46) independent of the controller (26).

8. The system of any preceding claim, further comprising a fuel reservoir (42), the first fuel system (44) and the second fuel system (46) fluidly coupled to the fuel reservoir (42) in parallel.

9. The system of any preceding claim, wherein the first fuel system (44) is configured to direct the first fuel into a first combustion zone (70) along the flowpath (40) between the inlet (66) and the turbine rotor (54), and the second fuel system (46) is configured to direct the second fuel into a second combustion zone (80) along the flowpath (40) between the first combustion zone (70) and the turbine rotor (54).

10. The system of claim 9, wherein:
the powerplant (24) comprises a heat engine (32) and an inter-burner (82) outside of the heat engine (32);
the first combustion zone (70) is located within the heat engine (32); and
the second combustion zone (80) is located within the inter-burner (82).

11. The system of any of claims 1 to 8, wherein the first fuel system (44) is configured to direct the first fuel into a first combustion zone (70) along the flowpath (40) between the inlet (66) and the turbine rotor (54), and the second fuel system (46) is configured to direct the second fuel into the first combustion zone (70) along the flowpath (40) between the first combustion zone (70) and the turbine rotor (54).

12. The system of claim 11, wherein the powerplant (24) comprises a heat engine (32) with a combustor (98), and the first combustion zone (70) is located within the combustor (98).

13. The system of any preceding claim, wherein the powerplant (24) comprises a turbo-compounded intermittent internal combustion engine (48).

14. The system of any preceding claim, wherein the powerplant (24) comprises a gas turbine engine (96).

15. The system of any preceding claim, wherein the propulsor rotor (22) is an un-ducted propulsor rotor or a ducted propulsor rotor.
